# EUROPÄISCHE PATENTSCHRIFT

(11) **EP 1 888 931 B1**
(45) Veröffentlichungstag und Bekanntmachung des Hinweises auf die Patenterteilung: **25.03.2009**
(21) Anmeldenummer: 06724486.3
(22) Anmeldetag: 21.04.2006
(51) Int. Cl.: F16D 23/14

(54) **AUSRÜCKLAGER EINER SCHALTTRENNKUPPLUNG**
DISENGAGEMENT BEARING FOR A GEARCHANGE CLUTCH
PALIER DE DEBRAYAGE D'UN EMBRAYAGE DE SEPARATION

(30) Priorität: 21.05.2005 DE 102005023523
(43) Veröffentlichungstag der Anmeldung: 20.02.2008
(73) Patentinhaber: Schaeffler KG, 91074 Herzogenaurach (DE)
(72) Erfinder: WINKELMANN, Ludwig, 91056 Erlangen (DE); DITTMER, Steffen, 91086 Aurachtal (DE); KLÖPFER, Bernhard, 91438 Bad Windsheim (DE)
(86) Internationale Anmeldenummer: PCT/EP2006/003665
(87) Internationale Veröffentlichungsnummer: WO 2006/125500

(56) Entgegenhaltungen:
- EP-A- 1 647 731
- EP-A1- 0 845 615
- GB-A- 2 072 770
- US-A- 3 570 638

## Beschreibung

### Gebiet der Erfindung

Die Erfindung betrifft ein Ausrücklager einer Schalttrennkupplung.

### Hintergrund der Erfindung

In der EP-1 647 731 und in der DE 101 25 691.4 ist ein Ausrücklager einer Schalttrennkupplung beschrieben, das ein Wälzlager aufweist, dessen drehstarrer Lagerring mit einer Betätigungseinrichtung und dessen umlaufender Lagerring mit einer Anlaufscheibe fest verbunden sind, wobei die Anlaufscheibe in Druckkontakt mit Federzungen einer Tellerfeder einer Schalttrennkupplung steht.

Bei Ausrücklagern mit Kunststoff-Anlaufscheiben treten insbesondere bei Inbetriebnahme störende Geräusche auf.

Da die Anlauffläche der Anlaufscheibe bei deren erster Inbetriebnahme noch sehr glatt ist, und somit ein niedriger Reibkoeffizient zwischen den Federzungen und der Anlaufscheibe vorliegt, kommt es bei der ersten Inbetriebnahme des Ausrücklagers zu Schlupf an den Kontaktstellen der Federzungen. Das Schlupfen verursacht störende Geräusche und das schleppende Mitdrehen des Ausrücklagers erschwert dessen Selbstzentrierung.

### Aufgabe der Erfindung

Der Erfindung liegt die Aufgabe zugrunde, bei dem gattungsbildenden Ausrücklager den anfänglichen Schlupf der Federzungen wegen des damit verbundenen Geräuschs und wegen dessen erschwerter Selbstzentrierung weitgehend zu vermeiden.

### Zusammenfassung der Erfindung

Die Aufgabe wird gelöst durch die Merkmale des unabhängigen Patentanspruchs 1.

Die Erfindung bezieht sich auf ein Ausrücklager einer Schalttrennkupplung mit einem Wälzlager, dessen drehstarrer Lagerring mit einer Betätigungseinrichtung und dessen umlaufender Lagerring mit einer Anlaufscheibe fest verbunden sind. Die Anlaufscheibe steht in Druckkontakt mit Federzungen einer Tellerfeder der Schalttrennkupplung. Da die Anlaufscheibe insbesondere bei einer ersten Inbetriebnahme noch sehr glatt ist, entsteht Schlupf zwischen ihr und den Federzungen. Dieser verursacht ein störendes Geräusch und erschwert die Selbstzentrierung des Ausrücklagers. Um diese Nachteile zu vermeiden, weist die erfindungsgemäße Anlaufscheibe im Kontaktbereich der Federzungen eine reibungserhöhende Mikrostruktur auf. Außerdem besitzt deren Werkstoff eine solche elastische und/oder plastische Verformbarkeit, dass bei Belastung der Anlaufscheibe durch die Federzungen diese in die Mikrostruktur eindringen und dadurch eine in Umfangsrichtung wirksame, formschlüssige Verbindung mit der Anlaufscheibe herstellen. Dadurch ergibt sich eine sofortige schlupf- und geräuscharme Mitnahme der Anlaufscheibe und deren rasche Selbstzentrierung.

Als Elemente der Mikrostruktur auf der Oberfläche der Anlaufscheibe kommen beispielsweise zentrumsgerichtete Mikrorippen oder Mikropyramiden und Mikrokegel in Frage. Diese Elemente können bei der Herstellung des Anlaufrings durch entsprechende Formgebung der Kunststoffspritzform oder zum Beispiel durch Heiß- oder Ultraschallprägen und durch Laserbearbeitung erzeugt werden. Aber auch eine grobe, nicht strukturierte Oberfläche, wie man sie durch Strahlen des Kunststoffwerkzeuges mit scharfkantigem Stahlgut erzielt, ist als Mikrostruktur geeignet.

Es hat Vorteile, wenn die Elemente der Mikrostruktur gegen den Drehsinn der Tellerfeder geneigt angeordnet sind. Dadurch wird das Eindringen der Federzungen in die Mikrostruktur gefördert.

Ein ähnlicher Effekt wird dadurch erzielt, dass der Endbereich der Federzungen im Drehsinn der Tellerfeder zur Oberfläche der Anlaufscheibe hin geneigt ist. Derartig "angestellte" Federzungen berühren die Anlaufscheibe mit einer ihrer Kanten. Die dadurch erhöhte Flächenpressung fördert das Eingraben der Federzungen unter Last in die Mikrostruktur bzw. Oberfläche der Anlaufscheibe.

Die Neigung des Endbereichs der Federzungen kann durch entsprechendes Anformen oder durch Verdrillen erreicht werden. Durch Wölben des Federzungenendes können zwei Kanten desselben aktiviert werden.

Eine vorteilhafte Weiterbildung der Erfindung besteht darin, dass die Anlaufscheibe eine stählerne Armierung aufweist, die überwiegend kunststoffumspritzt ist und dass ein kunststofffreier, ringförmiger Schenkel derselben vorgesehen ist, der zu Befestigung, vorzugsweise der Verschnappung der Anlaufscheibe mit dem umlaufenden Lagerring dient. Der kunststofffreie Teil ist mit geringem Aufwand den jeweiligen Befestigungssituationen anpassbar und somit universell verwendbar. Er benötigt im Vergleich zu einem entsprechenden Kunststoffteil erheblich weniger Bauraum. Dies ermöglicht auch das Nachrüsten von bereits in Serienproduktion befindlichen Ausrücklagern.

Zum Verbinden von Anlaufscheibe und deren Armierung eignen sich an Stelle des Umspritzens auch das Verschnappen, Verkleben, Ultraschallverschweißen, Ultraschallverprägen und das Heißprägen.

Von Vorteil bei dieser Stahl / Stahl-Verbindung ist es, dass keine Unterschiede bei der Wärmedehnung auftreten und keine Abhängigkeit von der Feuchtigkeitsaufnahme besteht.

Die Oberfläche der Anlaufscheibe verschleißt durch die Gleitbewegung der Federzungenenden aufgrund der rauhen Betriebsbedingungen. Erreicht die Wandstärke der Anlaufscheibe einen Wert von ca. 0,4 mm, besteht die Gefahr des Durchbrechens derselben, insbesondere dann, wenn das Federzungenende über einer Laufringnut eines Verdrehsicherungsnockens liegt. Diese Gefahr wird durch die Armierung gebannt.

Wenn die Armierung eine Oberflächenhärte von mindestens 400 HV aufweist, dient sie zusätzlich als Verschleißschutz der Anlaufscheibe und verlängert so deren Gebrauchsdauer.

Die Vielzahl der thermoplastischen Kunststoffe und deren reibungs- und verschleißmindernde sowie festigkeitssteigernde Zuschlagsstoffe ermöglicht eine anwendungsspezifische Optimierung des Materials der Anlaufscheibe.

### Kurze Beschreibung der Zeichnungen

Weitere Merkmale der Erfindung ergeben sich aus der folgenden Beschreibung und den Zeichnungen, in denen Ausführungsbeispiele der Erfindung schematisch dargestellt sind.

Es zeigen:
- Figur 1: einen Querschnitt eines Standard-Ausrücklagers;
- Figur 2: eine Ansicht einer Anlaufscheibe mit Rippen auf deren kupplungsseitiger Oberfläche;
- Figur 3: eine vergrößerte Ansicht der Anlaufscheibe von Figur 2 in Pfeilrichtung mit senkrecht stehenden Rippen;
- Figur 3a: die gleiche Ansicht wie in Figur 3, jedoch mit geneigten Rippen und
- Figur 4: eine vergleichbare Ansicht wie in Figur 3a, jedoch stärker vergrößert und mit "angestellten" Enden der Federzungen;

### Ausführliche Beschreibung der Zeichnungen

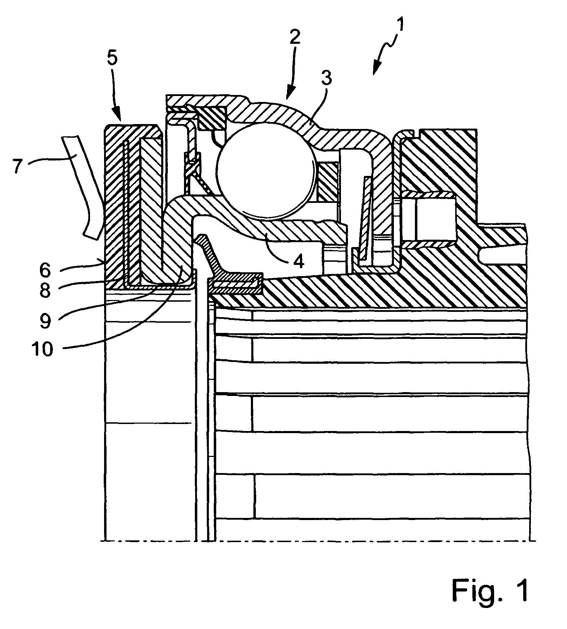

In Figur 1 ist ein Querschnitt eines Standard-Ausrücklagers 1 einer nicht gezeigten Schalttrennkupplung dargestellt. Das Ausrücklager 1 weist ein Wälzlager 2 auf, dessen drehstarrer Lagerring 3 mit einer nicht dargestellten Betätigungseinrichtung und dessen umlaufender Lagerring 4 mit einer Anlaufscheibe 5 fest verbunden sind. Eine Oberfläche 6 der Anlaufscheibe 5 steht in Druckkontakt mit Federzungen 7 einer Tellerfeder der Schalttrennkupplung, die nicht dargestellt sind.

Die Anlaufscheibe 5 besteht aus Kunststoff. Sie besitzt jedoch eine Armierung 8 aus Stahlblech, das eine Härte von mindestens 400 HV aufweist. Die Armierung 8 ist mit dem Kunststoff der Anlaufscheibe 5 umspritzt und dadurch mit dieser verbunden. Ein Teil der Armierung 8 ist kunststofffrei und bildet einen ringförmigen Schenkel 9. Dieser ist mit einem Ringflansch 10 des umlaufenden Lagerrings 4 durch Verschnappen fest verbunden. Diese Befestigungsart der Anlaufscheibe 5 bietet den Vorteil, dass auf Grund des gleichen Materials die Armierung 8 und der umlaufende Lagerring 4 gleiche Wärmedehnung besitzen. Auf diese Weise wird ein temperaturbedingtes Lockern der Anlaufscheibe 5 verhindert. Das Gleiche gilt für den Einfluss der Feuchtigkeit auf den Festsitz der Anlaufscheibe 5.

Ein weiterer wichtiger Vorteil der Armierung 8 aus gehärtetem Stahlblech ist der Verschleißschutz für die Anlaufscheibe 5. Dieser wird wirksam nach dem Verschleißen der Kunststoffschicht über der Armierung 8 durch die Federzungen 7. Die Armierung führt zu erheblicher Verlängerung der Gebrauchsdauer der Anlaufscheibe 5.

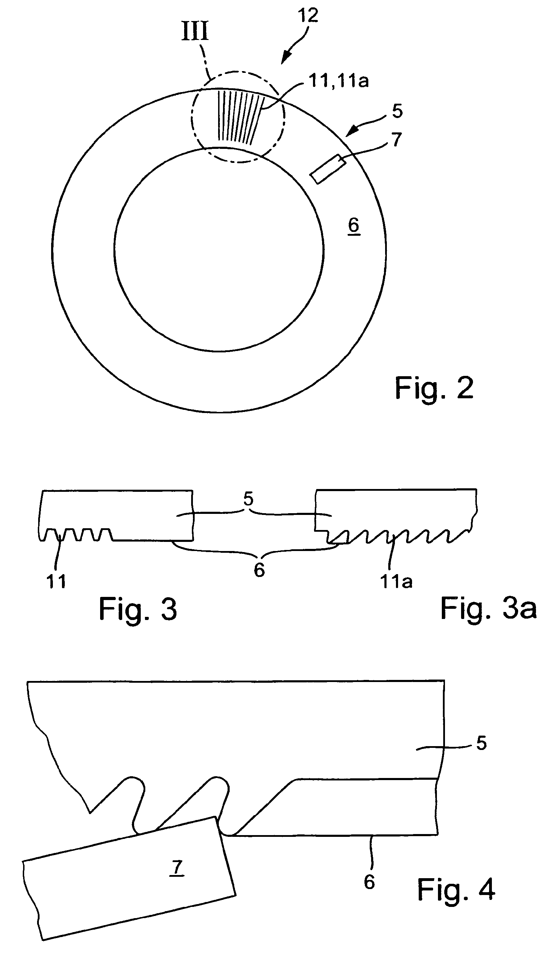

In Figur 2 ist eine Ansicht der zur Schalttrennkupplung ausgerichteten Anlaufscheibe 5 dargestellt, die in Druckkontakt mit den Federzungen 7 der Tellerfeder steht.

Die Oberfläche 6 der Anlaufscheibe 5 ist im Neuzustand sehr glatt. Dadurch kommt es vor allem beim Erstgebrauch der Kupplung zum Schlupf zwischen den Federzungen 7 und der glatten Oberfläche 6. Dieser Schlupf verursacht ein störendes Geräusch. Außerdem behindert er eine Mitnahme des Ausrücklagers 1 (siehe Figur 1) und damit dessen Selbstzentrierung.

Als Gegenmittel gegen den Schlupf dient ein Mikroformschluss zwischen der Oberfläche 6 und den Federzungen 7. Im einfachsten Falle wird erfindungsgemäß vorgeschlagen, eine Mikrostruktur der Oberfläche beim Herstellen durch grobkorngestrahlte Oberfläche im Spritzwerkzeug zu erzeugen. Eine Verbesserung wird durch die Mikrostruktur der Oberfläche 6 in Gestalt von zentrumsgerichteten Mikrorippen 11, 11a geschaffen. Deren Ansicht in Richtung des Pfeils 12 zeigen die Figuren 3 und 3a. In Figur 3 stehen die Mikrorippen 11 senkrecht zur Oberfläche 6, in Figur 3a sind die Mikrorippen 11a gegen den Drehsinn der Tellerfeder geneigt angeordnet und fördern so das Verhaken mit den Federzungen 7.

Dieser Effekt wird, wie in Figur 4 als Ansicht der Anlagescheibe 5 in Richtung des Pfeils 12 dargestellt, verstärkt, wenn der Endbereich der Federzungen 7 im Drehsinn der Tellerfeder zur Oberfläche 6 der Anlaufscheibe 5 hin geneigt ausgebildet ist.

Wichtig für die Bildung eines Mikroformschlusses ist, dass der Werkstoff der Anlaufscheibe 5 eine solche elastische und/oder plastische Verformbarkeit besitzt, dass beim Betätigen der Schalttrennkupplung die Federzungen in die Mikrostruktur eindringen und einen im Umfangsrichtung wirksamen Mikroformschluss mit der Anlaufscheibe 5 bilden. Dadurch wird deren sofortige und schlupf- wie geräuscharme Mitnahme und eine rasche Selbstzentrierung des Ausrücklagers 1 erreicht.

### Bezugszeichenliste

- 1: Ausrücklager
- 2: Wälzlager
- 3: drehstarrer Lagerring
- 4: umlaufender Lagerring
- 5: Anlaufscheibe
- 6: Oberfläche
- 7: Federzunge
- 8: Armierung
- 9: ringförmiger Schenkel
- 10: Ringflansch
- 11: Mikrorippen
- 11a: Mikrorippen
- 12: Pfeil

## Patentansprüche

1. Ausrücklager einer Schalttrennkupplung, mit einem Wälzlager (2), dessen drehstarrer Lagerring (3) mit einer Betätigungseinrichtung und dessen umlaufender Lagerring (4) mit einer Anlaufscheibe (5) fest verbunden sind, wobei die Anlaufscheibe (5) in Druckkontakt mit Federzungen (6) einer Tellerfeder der Schalttrennkupplung steht, **dadurch gekennzeichnet, dass** auf der Oberfläche (6) der Anlaufscheibe (5) im Kontaktbereich der Federzungen (7) eine reibungserhöhende Mikrostruktur angeordnet ist und dass der Werkstoff der Anlaufscheibe (5) eine solche elastische und/oder plastische Verformbarkeit aufweist, dass bei deren Belastung durch die Federzungen (7) diese in die Mikrostruktur eindringen und **dadurch** eine in Umfangsrichtung wirksame, formschlüssige Verbindung mit der Anlaufscheibe (5) schaffen.

2. Ausrücklager nach Anspruch 1, **dadurch gekennzeichnet, dass** die Oberfläche durch Grobstrahlen der Spritzwerkzeugoberfläche eine raue Oberfläche mit mindestens Ra 3,2 bzw. Rz 16 besitzt.

3. Ausrücklager nach Anspruch 2, **dadurch gekennzeichnet, dass** als Elemente der Mikrostruktur beispielsweise zentrumsgerichtete Mikrorippen (11, 11a) und Mikropyramiden sowie Mikrokegel vorgesehen sind.

4. Ausrücklager nach Anspruch 3, **dadurch gekennzeichnet, dass** die Elemente der Mikrostruktur gegen den Drehsinn der Tellerfeder zur Oberfläche (6) der Anlaufscheibe (5) geneigt ausgebildet sind.

5. Ausrücklager nach Anspruch 4, **dadurch gekennzeichnet, dass** der Endbereich der Federzungen (7) im Drehsinn der Tellerfeder zur Oberfläche (6) der Anlaufscheibe (5) hin geneigt ausgebildet ist.

6. Ausrücklager nach Anspruch 5, **dadurch gekennzeichnet, dass** die Anlaufscheibe (5) eine stählerne Armierung (8) aufweist, die überwiegend kunststoffumspritzt ist und dass ein kunststofffreier, ringförmiger Schenkel (9) derselben vorgesehen ist, der zur Befestigung, vorzugsweise zur Verschnappung der Anlaufscheibe (5) mit dem umlaufenden Lagerring (4) dient.

7. Ausrücklager nach Anspruch 6, **dadurch gekennzeichnet, dass** die Armierung (8) eine Mindestoberflächenhärte von 400 HV aufweist.

8. Ausrücklager nach Anspruch 7, **dadurch gekennzeichnet, dass** für die Anlaufscheibe (5) oder deren Beschichtung neben PA 46 CF 30 PTFE 5, PPA-GF 30 PTFE 15 und PA 46-GF 30 PTFE 5, folgende Werkstoffe geeignet sind:
- Thermoplastische Kunststoffe auf der Basis hochwärmebeständiger Polyamide wie:
Polyamid 46 (PA 46) oder teilaromatische Polyamide, vorzugsweise Polyphthalamid (PPA) oder Poly-Hexamethylen-Terephtalamid (PA 6 T) mit Poly-Hexamethylen-Isophthalamid (PA6T/61) und/oder Poly-Hexamethylen-Adipinamid (PA6T/66, PA6T/61/66) oder Poly-Methylpentamethylen-Terephthalamid (PA6T/MPMDT) mit reibungs- und verschleißmindernden sowie festigkeitssteigernden Zuschlagstoffen;
- Thermoplastische Kunststoffe auf der Basis anderer hochwärmebeständiger Kunststoffe wie:
Polyaryletherketone (PAEK).

9. Ausrücklager nach Anspruch 8, **dadurch gekennzeichnet, dass** für die Werkstoffe folgende Zuschlagstoffe verwendbar sind:
- Kohlenstofffasern mit einem Gewichtsanteil von 1 bis 40%, vorzugsweise von 20 bis 30% und/oder;
- Glasfasern mit einem Gewichtsanteil von 1 bis 40%, vorzugsweise von 20 bis 35%, und/oder
- Aramidfasern mit einem Gewichtsanteil von 1 bis 40%, vorzugsweise von 1 bis 15%;
- Molybdändisulfid mit einem Gewichtsanteil von 1 bis 5% und/oder:
- Graphit mit einem Gewichtsanteil von 1 bis 10%, und/oder:
- Polytetrafluorethylen (PTFE) mit einem Gewichtsanteil von 1 bis 30%, vorzugsweise von 5 bis 15, und/oder:
- Polyphenylensulfon (PPSO₂, Ceramer), mit einem Gewichtsanteil von 1 bis 30%, vorzugsweise von 1 bis 15%;
- Kalium- / Titan-Whiskers K2 Ti 6013 von 1 bis 40%, vorzugsweise von 20 bis 35%.

## Claims

1. Release bearing of a gearshift dutch, which release bearing comprises a rolling bearing (2), the rotationally fixed bearing ring (3) of which is firmly connected to an actuating device and the rotatable bearing ring (4) of which is firmly connected to a stop disk (5), said stop disk (5) being in pressure contact with spring tongues (7) of a Belleville washer of the gearshift dutch, **characterised in that** a friction-increasing microstructure is arranged on the surface (6) of the stop disk (5) in the contact region of the spring tongues (7), and the material of the stop disk (5) has such an elastic and/or plastic deformability that, when the stop disk (5) is loaded by the spring tongues (7), these spring tongues (7) penetrate into the microstructure and thus create with the stop disk (5) an interlocked engagement which is operative in peripheral direction.

2. Release bearing according to claim 1, **characterised in that** the surface is a rough surface with at least Ra 3.2 or Rz 16 obtained by coarse grit blasting of the surface of the injection moulding die.

3. Release bearing according to daim 2, **characterised in that**, as elements of the microstructure are provided, for example, centre-point oriented micro-ribs (11, 11a) and micro-pyramids as also micro-cones.

4. Release bearing according to daim 3, **characterised in that** the elements of the microstructure are inclined relative to the surface (6) of the stop disk (5) in a direction opposite to the direction of rotation of the Belleville washer.

5. Release bearing according to claim 4, **characterised in that** the end region of the spring tongues (7) is inclined relative to the surface (6) of the stop disk (5) in the direction of rotation of the Belleville washer.

6. Release bearing according to daim 5, **characterised in that** the stop disk (5) comprises a steel armour (8) that is substantially extrusion-coated with a plastic material, and the armour (8) possesses an annular leg (9) that is free of the plastic material and serves to fix the stop disk (5), preferably by a snap connection to the rotatable bearing ring (4).

7. Release bearing according to daim 6, **characterised in that** the armour (8) possesses a minimum surface hardness of 400 HV.

8. Release bearing according to claim 7, **characterised in that**, in addition to PA 46 CF 30 PTFE 5, PPA-GF 30 PTFE 15 and PA 46-GF 30 PTFE 5, the following materials are suitable for making the stop disk (5) or its coating:
- thermoplastic plastics based on high temperature resistant polyamides like:
polyamide 46 (PA 46) or partially aromatic polyamides, preferably polyphthalamide (PPA) or polyhexamethylene terephtalamide (PA 6 T) with polyhexamethylene isophthalamide (PA6T/61) and/or polyhexamethylene adipinamide (PA6T/66, PA6T/61/66) or polymethylpentamethylene terephthalamide ((PA6T/MPMDT) with friction-reducing and wear-redudng as well as strength-increasing additive;
- thermoplastic plastics based on other high temperature resistant plastic materials like:
polyaryletherketones (PAEK).

9. Release bearing according to claim 8, **characterised in that** the following additives can be used for the materials:
- carbon fibres with a weight percentage from 1 to 40%, preferably from 20 to 30% and/or;
- glass fibres with a weight percentage from 1 to 40%, preferably from 20 to 35 %, and/or
- aramide fibres with a weight percentage from 1 to 40%, preferably from 1 to 15%;
- molybdenum disulphide with a weight percentage from 1 to 5% and/or:
- graphite with a weight percentage from1 to 10%, and/or:
- polytetrafluorethylene (PTFE) with a weight percentage from 1 to 30%, preferably from 5 to 15%, and/or:
- polyphenylenesulphone (PPSO₂ ceramer) with a weight percentage from 1 to 30%, preferably from 1 to 15%;
- potassium/titanium whiskers K2 Ti 6013 from 1 to 40%, preferably from 20 to 35%.

## Revendications

1. Butée de débrayage d'un embrayage, laquelle butée de débrayage comprend un roulement (2) dont l'anneau (3) immobilisé en rotation est fermement fixé à un dispositif d'actionnement et dont l'anneau (4) rotatif est fermement fixé à une plaque d'arrêt (5), ladite plaque d'arrêt (5) étant en contact de pression avec des languettes (7) d'un ressort Belleville de l'embrayage, **caractérisée en ce que**, sur la surface (6) de la plaque d'arrêt (5), dans sa région de contact avec les languettes (7) de ressort est agencée une microstructure qui augmente la friction, et que le matériau de la plaque d'arrêt (5) possède une telle déformabilité élastique et/ou plastique que, lors de sa mise en charge par les languettes (7) de ressort, ces dernières pénètrent dans la microstructure et créent, de ce fait, une liaison par concordance de forme avec la plaque d'arrêt (5), laquelle liaison agit en direction périphérique.

2. Butée de débrayage selon la revendication 1, **caractérisée en ce que** la surface possède une rugosité superficielle, au moins, de Ra 3,2 ou Rz 16 obtenue par grenaillage à grosses grenailles.

3. Butée de débrayage selon la revendication, **caractérisée en ce que**, comme éléments de la microstructure sont prévus, par exemple, des micro nervures (11, 11a) et des micro pyramides ainsi que des micro cônes, orientés, à chaque fois, vers le centre.

4. Butée de débrayage selon la revendication 3 **caractérisée en ce que** les éléments de la microstructure sont inclinés par rapport à la surface (6) de la plaque d'arrêt (5) en sens inverse de la rotation du ressort Belleville.

5. Butée de débrayage selon la revendication 4, **caractérisée en ce que** la région d'extrémité des languettes (7) de ressort est inclinée par rapport à la surface (6) de la plaque d'arrêt (5) en sens de la rotation du ressort Belleville.

6. Butée de débrayage selon la revendication 5, **caractérisée en ce que** la plaque d'arrêt (5) comprend une armature (8) en acier qui est recouverte, pour la plupart, d'une matière plastique par extrusion, et **en ce que** cette armature (8) comprend un bras annulaire (9) qui est exempte de matière plastique et sert à la fixation de la plaque d'arrêt (5) à l'anneau (4) rotatif de roulement, de préférence, par encliquetage.

7. Butée de débrayage selon la revendication 6, **caractérisée en ce que** l'armature (8) possède une dureté superficielle minimum de 400 HV.

8. Butée de débrayage selon la revendication 7, **caractérisée en ce que**, outre les matériaux PA 46 CF 30 PTFE 5, PPA-GF 30 PTFE 15 et PA 46-GF 30 PTFE 5, les matériaux suivants sont également convenable pour la fabrication de la plaque d'arrêt (5) ou de son revêtement :
- des thermoplastiques sur la base de polyamides résistants aux hautes températures, tels que :
polyamide 46 (PA 46) or polyamides partiellement aromatiques, de préférence, polyphthalamide (PPA) ou polyhexaméthylène téréphtalamide (PA 6 T) avec poly-hexaméthylène isophthalamide (PA6T/61) et/ou polyhexaméthylène adipinamide (PA6T/66, PA6T/61/66) ou poly-méthylpentaméthylène terephthalamide ((PA6T/MPMDT) avec des additifs anti-frottants et anti-usure ainsi que des additifs qui augmentent la résistance mécanique ;
- des thermoplastiques sur la base d'autres matières plastiques telles que :
polyaryléthercétones (PAEK).

9. Butée de débrayage selon la revendication 8, **caractérisée en ce que** les matériaux peuvent avoir des additifs suivants :
- fibres de carbone avec un pourcentage en poids de 1 à 40%, de préférence, de 20 à 30% et/ou ;
- fibres de verre avec un pourcentage en poids de 1 à 40%, de préférence, de 20 à 35 %, et/ou
- fibres d'aramide avec un pourcentage en poids de 1 à 40%, de préférence, de 1 à 15% ;
- bisulfure de molybdène avec un pourcentage en poids de 1 à 5% et/ou :
- graphite avec un pourcentage en poids de 1 à 10%, et/ou :
- polytétrafluoréthylène (PTFE) avec un pourcentage en poids de 1 à 30%, de préférence, de 5 à 15%, et/ou :
- polyphénylène sulfone (PPSO₂, céramère) avec un pourcentage en poids de 1 à 30%, de préférence, de 1 à 15%;
- barbes de potassium / titane K2 Ti 6013 de 1 à 40%, de préférence, de 20 à 35%.
